Europäisches Patentamt

European Patent Office

Office européen des brevets

(19)

(11) Numéro de publication: **0074871**
**B1**

(12) ## FASCICULE DE BREVET EUROPEEN

(45) Date de publication du fascicule du brevet:
**10.12.86**

(21) Numéro de dépôt: **82401572.1**

(22) Date de dépôt: **24.08.82**

(51) Int. Cl.⁴: **C 22 B 9/02, C 22 B 34/12,**
**H 05 B 6/24, F 27 B 14/06**

(54) **Procédé de séparation physique d'une phase métallique et de scories dans un four à induction.**

(30) Priorité: **03.09.81 FR 8116783**

(43) Date de publication de la demande:
**23.03.83 Bulletin 83/12**

(45) Mention de la délivrance du brevet:
**10.12.86 Bulletin 86/50**

(84) Etats contractants désignés:
**BE DE GB**

(56) Documents cités:
**DE - A - 1 533 904**
**DE - B - 1 024 932**
**DE - B - 1 153 134**
**DE - B - 1 191 970**
**FR - A - 2 317 957**
**US - A - 2 903 759**
**US - A - 3 544 757**

**METALLURGICAL TRANSACTIONS, vol. 5, mars 1974,**
**pages 785-787; R. MEHRABIAN et al.: "Refining by**
**Partial Solidification".**

(73) Titulaire: **COMPAGNIE GENERALE DES MATIERES**
**NUCLEAIRES (COGEMA), 2, rue Paul Dautier B.P. 4,**
**F-78141 Velizy-Villacoublay (FR)**

(72) Inventeur: **Bolze, Georges, 5, rue Marcel Renault,**
**F-75017 Paris (FR)**

(74) Mandataire: **Gutmann, Ernest et al, S.C. Ernest Gutmann**
**- Yves Plasseraud 67, boulevard Haussmann,**
**F-75008 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

### Description

L'invention est relative à un procédé de séparation physique d'une phase métallique et de scories dans un four à induction.

Par «phase métallique», il faut entendre tout métal, alliage, composé intermétallique ou d'une façon générale tout matériau conducteur électrique dans lequel des courants induits peuvent être produits, notamment par couplage avec un courant inducteur, même à basse fréquence, susceptible d'être fourni par l'inducteur du four à induction.

De la même façon, il faut entendre par «scories» tous matériaux tels que flux, fondants, laitiers et solvants, notamment ceux du type utilisé en électrométallurgie, qui sont essentiellement isolants à basse température, mais dont la conductibilité s'accroît lorsque s'élève la température, de sorte ment relatif, les positions relatives de ces zones étant déterminées en relation avec celles d'au moins un inducteur, de préférence deux inducteurs distincts, coagissant avec ce creuset et en ce que, dans la seconde zone, ladite fréquence d'induction est suffisamment réduite pour soumettre la phase métallique à des forces centripètes entraînant sa concentration sélective avant solidification dans la région interne, notamment axiale du four à induction, par soustraction partielle ou pratiquement totale de la phase métallique à l'action de la gravité.

Lorsque les scories représentent une proportion volumique importante, notamment plus de 10% en volume de la totalité des matériaux, la puissance et la fréquence du courant d'induction dans cette seconde zone sont réglées de façon telle que lesdites scories y soient aussi progressivement ramenées à l'état solide.

Dans la plupart des cas, la puissance et la fréquence du courant inducteur exerçant ses effets au niveau de la première zone sont de préférence également réglées de façon à amener et/ou à maintenir la phase métallique à l'état fondu, à l'intérieur de cette première zone.

Dans un mode de mise en œuvre préféré du procédé de l'invention, l'on produit un déplacement relatif des matériaux vis-à-vis des première et seconde zones susdites, dont les positions relatives sont déterminées en relation avec celle d'au moins un inducteur, de préférence deux inducteurs distincts coagissant avec le creuset.

Dans ce qui précède, on a parlé – afin de faciliter l'exposé – et on parlera encore souvent de couplage ou de non-couplage du courant d'induction ou de l'inducteur avec les scories (ou la phase métallique) pour exprimer, dans les conditions qui seront alors évoquées, la capacité ou non du courant inducteur d'induire un courant électrique dans lesdites scories (ou la phase métallique).

Afin de permettre les couplages dont il est question ci-dessus, et lorsque ceux-ci sont désirés, il est nécessaire d'avoir recours à un creuset transparent aux champs électro-magnétiques, en d'audes procédés industriels. Il s'agit par exemple de la réaction de purification du zirconium, récupéré après usage, à partir des gaines de réacteurs nucléaires, par contact avec ce laitier-solvant de ces produits d'oxydation pour finalement former des scories séparables du métal.

L'invention s'applique donc à la séparation de phases métalliques et de phases de scories, telles qu'elles sont obtenues au terme de toute forme d'élaboration, qu'il s'agisse de réactions chimiques, d'extractions physiques et/ou chimiques etc.

Elle s'applique avec avantage – sans pour autant y être limitée – à la séparation de phases métalliques ayant des points de fusion élevés, notamment supérieurs à 1400 °C d'une part, et de phases contenant, par exemple, des oxydes et/ou halogénures de métaux alcalins, alcalino-terreux, d'aluminium ou de magnésium, etc., d'autre part nant en continu, l'extraction en continu des matériaux traités.

Il est également entendu que l'expression «séparation de la phase métallique et des scories» implique simplement l'obtention d'une phase métallique, homogène ou continue, distincte de la phase des scories. Il s'agit ici d'une «séparation de phases» n'incluant pas nécessairement l'opération consistant ensuite dans le «décollage» éventuel des deux phases obtenues l'une de l'autre. Il va sans dire aussi que l'invention s'applique également au cas de la séparation d'une phase métallique relativement homogène et de scories formant le cas échéant des phases hétérogènes entre elles.

Dans l'un de ses premiers aspects l'invention permet de réaliser des élaborations de phases métalliques dans des creusets transparents sans fond, de préférence verticaux, généralement associés avec deux inducteurs fixes vis-à-vis du creuset. Ils définissent alors deux zones elles-mêmes fixes à l'intérieur du creuset. Le déplacement relatif des matériaux vis-à-vis de l'inducteur est alors obtenu par déplacement de la charge des matériaux eux-mêmes à l'intérieur du creuset.

Plus particulièrement le procédé selon l'invention permet une alimentation en continu d'un tel creuset, lui-même contenu à l'intérieur du four à induction, dans sa partie supérieure avec des matériaux résultant, après contact et chauffage, en la formation d'une phase métallique et de scories toutes deux essentiellement à l'état fondu dans la susdite première zone, les scories étant amenées à se solidifier et à se séparer de la phase métallique dans la seconde zone. De préférence, la phase métallique et la phase de scories sont alors extraites par l'extrémité du creuset, en aval de la direction de déplacement des matériaux, notamment par l'extrémité inférieure du creuset (creuset alors sans fond dans le cas d'un creuset vertical).

Dans un mode de mise en œuvre préféré du procédé selon l'invention, la fréquence du courant d'induction dans la seconde zone est réduite à une valeur qui n'autorise aucune possibilité de électromagnétiques entretenus à l'intérieur de ce four à induction, est, dans une première variante, caractérisé en ce que l'on soumet le matériau traité:

– dans une première zone à un courant d'induction de puissance et de fréquence suffisamment élevées pour permettre le couplage direct de ce courant d'induction avec le matériau dans cette première zone, de façon à maintenir les scories à l'état fondu,

– puis dans une seconde zone, de préférence adjacente à la précédente, à un courant d'induction de puissance ou de fréquence, ou les deux à la fois, telles que le couplage direct entre le courant d'induction et les scories ne soit plus permis;

en ce que l'on produit un déplacement relatif des matériaux à l'intérieur du creuset vis-à-vis des susdites première zone et seconde zones, en aval de la précédente dans le sens dudit déplacement relatif, les positions relatives de ces zones étant déterminées en relation avec celles d'au moins un inducteur, de préférence deux inducteurs distincts, coagissant avec ce creuset et en ce que, dans la seconde zone, ladite fréquence d'induction est suffisamment réduite pour soumettre la phase métallique à des forces centripètes entraînant sa concentration sélective avant solidification dans la région interne, notamment axiale du four à induction, par soustraction partielle ou pratiquement totale de la phase métallique à l'action de la gravité.

Lorsque les scories représentent une proportion volumique importante, notamment plus de 10% en volume de la totalité des matériaux, la puissance et la fréquence du courant d'induction dans cette seconde zone sont réglées de façon telle que lesdites scories y soient aussi progressivement ramenées à l'état solide.

Dans la plupart des cas, la puissance et la fréquence du courant inducteur exerçant ses effets au niveau de la première zone sont de préférence également réglées de façon à amener et/ou à maintenir la phase métallique à l'état fondu, à l'intérieur de cette première zone.

Dans un mode de mise en œuvre préféré du procédé de l'invention, l'on produit un déplacement relatif des matériaux vis-à-vis des première et seconde zones susdites, dont les positions relatives sont déterminées en relation avec celle d'au moins un inducteur, de préférence deux inducteurs distincts coagissant avec le creuset.

Dans ce qui précède, on a parlé – afin de faciliter l'exposé – et on parlera encore souvent de couplage ou de non-couplage du courant d'induction ou de l'inducteur avec les scories (ou la phase métallique) pour exprimer, dans les conditions qui seront alors évoquées, la capacité ou non du courant inducteur d'induire un courant électrique dans lesdites scories (ou la phase métallique).

Afin de permettre les couplages dont il est question ci-dessus, et lorsque ceux-ci sont désirés, il est nécessaire d'avoir recours à un creuset transparent aux champs électro-magnétiques, en d'autres termes un creuset n'étant pratiquement pas susceptible d'être lui-même «couplé» sur l'inducteur ou les inducteurs.

A cet égard on a avantageusement recours à un creuset «froid» constitué de façon connue en soi d'une pluralité d'éléments creux refroidis par une circulation de fluide, notamment d'eau, et séparés entre eux par des éléments isolants, ces éléments creux et ces pièces isolantes constituant ensemble une enceinte propre à recevoir les matériaux à traiter. De préférence encore ce creuset froid est d'une forme générale sensiblement cylindrique surtout dans le cas des creusets sans fonds, tels qu'ils sont envisagés dans ce qui suit. Il est entendu que l'expression «forme sensiblement cylindrique» inclut les formes très légèrement tronconiques formant la dépouille bien connue des spécialistes, cette dépouille visant à faciliter le démoulage, ou dans le cas d'un procédé fonctionnant en continu, l'extraction en continu des matériaux traités.

Il est également entendu que l'expression «séparation de la phase métallique et des scories» implique simplement l'obtention d'une phase métallique, homogène ou continue, distincte de la phase des scories. Il s'agit ici d'une «séparation de phases» n'incluant pas nécessairement l'opération consistant ensuite dans le «décollage» éventuel des deux phases obtenues l'une de l'autre. Il va sans dire aussi que l'invention s'applique également au cas de la séparation d'une phase métallique relativement homogène et de scories formant le cas échéant des phases hétérogènes entre elles.

Dans l'un de ses premiers aspects l'invention permet de réaliser des élaborations de phases métalliques dans des creusets transparents sans fond, de préférence verticaux, généralement associés avec deux inducteurs fixes vis-à-vis du creuset. Ils définissent alors deux zones elles-mêmes fixes à l'intérieur du creuset. Le déplacement relatif des matériaux vis-à-vis de l'inducteur est alors obtenu par déplacement de la charge des matériaux eux-mêmes à l'intérieur du creuset.

Plus particulièrement le procédé selon l'invention permet une alimentation en continu d'un tel creuset, lui-même contenu à l'intérieur du four à induction, dans sa partie supérieure avec des matériaux résultant, après contact et chauffage, en la formation d'une phase métallique et de scories toutes deux essentiellement à l'état fondu dans la susdite première zone, les scories étant amenées à se solidifier et à se séparer de la phase métallique dans la seconde zone. De préférence, la phase métallique et la phase de scories sont alors extraites par l'extrémité du creuset, en aval de la direction de déplacement des matériaux, notamment par l'extrémité inférieure du creuset (creuset alors sans fond dans le cas d'un creuset vertical).

Dans un mode de mise en œuvre préféré du procédé selon l'invention, la fréquence du courant d'induction dans la seconde zone est réduite à une valeur qui n'autorise aucune possibilité de couplage électromagnétique avec les scories, quelle qu'en soit la température.

En particulier, et surtout dans le cas de scories abondantes vis-à-vis de la quantité de phase métallique élaborée, ladite fréquence est même suffisamment réduite pour soumettre la phase métallique elle-même à des forces centripètes entraînant le rassemblement sélectif de la phase métallique avant solidification, partiellement ou totalement dans la région axiale du four à induction (ou de l'inducteur) en particulier contre l'action de la gravité. Les scories tendent par conséquent à se rassembler à proximité des parois froides du creuset transparent, et à progressivement se solidifier à partir des parois en formant un gradient de solidification, lequel tend, dans la direction du déplacement relatif, à progressivement s'étendre vers la phase métallique à partir des parois du creuset. La solidification des scories se trouve d'autant plus facilitée qu'elles ne sont plus alors «brassées» par le champ électromagnétique.

Si l'on tient compte de ce que la force centripète qui s'exerce différentiellement sur la phase métallique dans la seconde zone tend à croître lorsque diminue la fréquence appliquée dans la seconde zone, on conçoit que l'on puisse régler les conditions de rassemblement de la phase métallique autour de l'axe, au fur est à mesure du déplacement relatif de cette phase vis-à-vis de l'inducteur, pour finalement obtenir une phase métallique sensiblement continue qui se solidifie lorsque sa température atteint le point de solidification. Il devient ainsi possible d'extraire de la seconde zone une pièce dont le cœur est constitué par un lingot métallique.

En variante, on peut également ajuster dans la seconde zone les conditions du refroidissement, par une diminution de la puissance électrique fournie au second inducteur.

La possibilité de régler la fréquence du champ magnétique inducteur au niveau de la première zone à une valeur telle qu'elle permette le couplage direct sur les scories elles-mêmes permet aussi, et ce plus particulièrement lorsque l'invention est appliquée à un procédé d'élaboration en continu d'une phase métallique, de régler les conditions d'alimentation du four en réactifs dans des conditions permettant le «pré-fractionnement» ultérieur en lingots successifs de la phase métallique, qui sera rassemblée dans la seconde zone à l'intérieur d'une masse solidifiée de scories. La séparation des lingots entre eux est ensuite aisée. A cette fin l'on peut, selon une disposition préférée de l'invention, limiter par intermittences l'alimentation en continu du creuset en les matériaux appropriés, aux seuls éléments qui seront ultérieurement aptes à former des scories ou des laitiers.

On peut alors obtenir, au sortir de la seconde zone et plus particulièrement de la partie inférieure du four, des pièces allongées, solidifiées, comprenant à intervalles successifs des parties consistant, en scories dans la totalité de leur section. En effet dans la première zone, il se forme à l'occasion de ce processus un «bouchon intermédiaire liquide» alors formé des seules scories, alors à l'état fondu en raison de leur couplage électromagnétique avec l'inducteur, ce «bouchon intermédiaire» étant ensuite «solidifié» à l'occasion de son passage à travers la susdite seconde zone. Il est alors aisé à la sortie du four de provoquer la séparation des lingots métalliques entre eux au niveau de ces «bouchons solidifiés». En raison de leur fragilité ceux-ci peuvent être brisés par simple choc. Cette technique permet par conséquent d'éviter les opérations de «coupe à la volée» en usage dans certains procédés antérieurs de fabrication en continu de lingots, en vue de les fragmenter (découpage au moyen de dispositifs de coupe alors rendus solidaires avec une des parties de la pièce à découper).

D'autres caractéristiques de l'invention apparaîtront encore au cours de la description qui suit d'installations et de modes de mise en œuvre préférés du procédé selon l'invention, à l'aide des dessins dans lesquels

– la figure 1 est un schéma de principe en coupe verticale d'un creuset froid, sans fond, associé à deux inducteurs d'un four à induction, l'installation étant destinée à permettre des élaborations de phases métalliques en continu;

– la figure 2 est un schéma de principe visant à expliciter les phénomènes de séparation de phases solide-solide ou solide-liquide susceptibles d'intervenir dans le creuset, dans une variante de mise en œuvre du procédé selon l'invention;

– la figure 3 est un schéma de principe d'une installation en variante, dans laquelle les déplacements relatifs peuvent être produits par le déplacement des inducteurs relativement au creuset contenant les matériaux à traiter, ou vice versa.

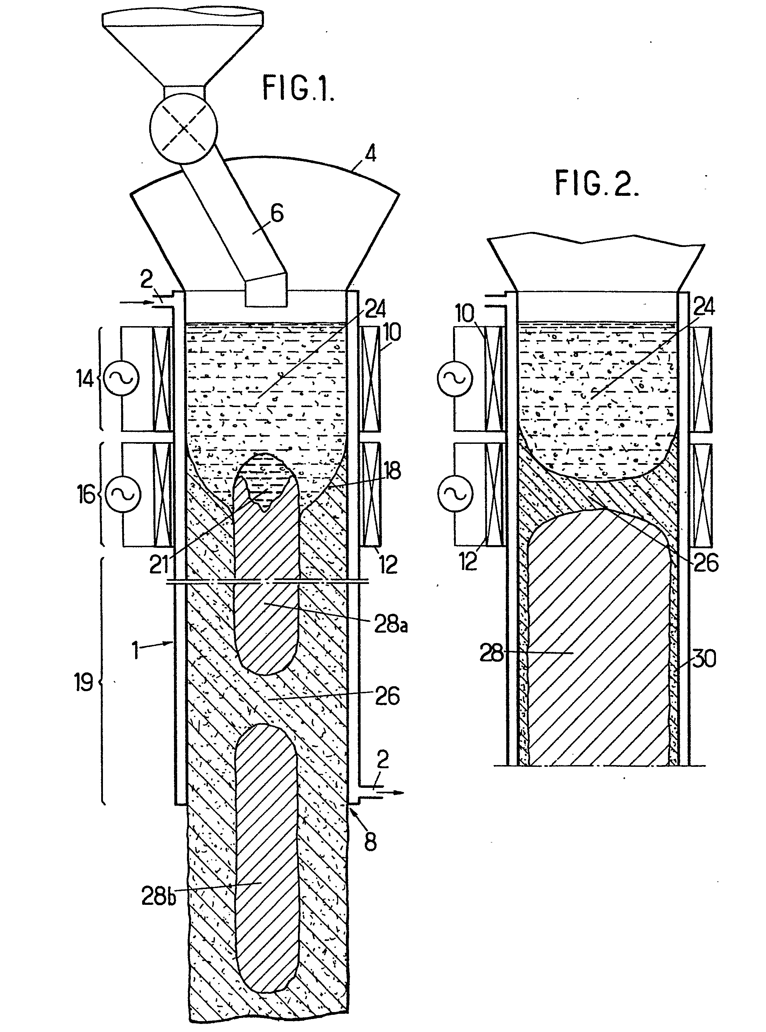

Si l'on se réfère à la figure 1 et si l'on fait tout d'abord abstraction des éléments plus particulièrement concernés par l'invention on constate que cette installation comporte un creuset «froid» (1) coiffé par une enceinte d'alimentation (4) dans laquelle une atmosphère contrôlée peut être assurée par des moyens en soi classiques non représentés. Un ou plusieurs dispositifs (6) d'alimentation, d'observation et de prise de température etc, communiquent de façon en soi connue avec cette enceinte d'alimentation. Le creuset froid, ici de forme essentiellement cylindrique, est maintenu en place par des moyens non représentés.

Ce creuset essentiellement vertical est pourvu d'un système également non représenté ayant pour objet, selon le cas, soit de soutenir, soit d'extraire un lingot solidifié à proximité de son extrémité inférieure ou fond ouvert (8).

Afin de permettre la mise en œuvre du procédé selon l'invention, ce creuset coopère avec au moins un inducteur, de préférence deux inducteurs (10) et (12) distincts dans le mode de réalisation représenté, associés à des alimentations électriques de fréquences distinctes et entourant respectivement deux zones successives (14) et (16) de ce creuset.

Conformément à l'invention on produit le déplacement relatif des matériaux introduits dans ce creuset, à travers la première zone (14), dans laquelle ils sont soumis à l'action d'un courant d'induction de puissance et de fréquence suffisamment élevées pour que les matériaux puissent réagir ou fondre et donner lieu, dans cette première zone, à la formation d'une part, d'une phase métallique et, d'autre part, d'une phase de scories liquides. A cette fin la fréquence du courant d'induction de l'inducteur (10) est réglée à une valeur qui, à la température maintenue dans cette zone, permet le couplage entre l'inducteur (10) et les scories fondues elles-mêmes.

Au contraire les matériaux entrant dans la seconde zone (16), en aval de la première zone (14), y sont soumis à l'action d'un courant d'induction de puissance et de fréquence suffisamment réduites pour que cesse la possibilité d'un couplage direct entre l'inducteur (12) et les scories fondues. Au surplus la fréquence et la puissance du courant d'induction sont réglées de façon à permettre le refroidissement progressif des matériaux passant dans cette seconde zone, celle-ci étant notamment d'une longueur suffisante, pour qu'à sa sortie, les scories soient essentiellement revenues entièrement à l'état solide. Comme on l'a indiqué plus haut, la fréquence du courant d'induction appliquée à cette zone est aussi suffisamment réduite pour que, d'une part, il n'y ait plus de possibilité de couplage entre l'inducteur et les scories, quelle que soit leur température et, d'autre part, que les forces centripètes appliquées différentiellement aux scories et à la phase métallique deviennent, en ce qui concerne ces dernières, prépondérantes vis-à-vis de la gravité.

On a représenté très schématiquement, aux seules fins d'explicitation, la nature des phénomènes présumés qui se produisent dans ladite seconde zone. Alors que dans la première zone (14) l'on observe un fort brassage des matériaux traités, et maintenant par conséquent la phase métallique et les scories en état de dispersion mutuelle, on constate, lorsque ces matériaux entrent dans la seconde zone (16), que l'effet des forces centripètes accrues induites par un courant de fréquence réduite tend à rassembler la phase métallique dans la partie axiale de ladite zone. En même temps se forme dans la phase de scories un gradient de température entraînant une solidification progressive à partir des parois du creuset, la phase solidifiée tendant à s'étendre vers le lingot métallique en cours de formation dans cette zone, au fur et à mesure du déplacement de la charge vers le bas, comme schématiquement représenté par la ligne (18), laquelle symbolise le front liquide-solide dans les scories.

La puissance débitée dans l'inducteur (16) permet de contrôler les conditions de solidification de la phase métallique (28a) dont la partie encore liquide schématisée en (21) est toujours encore couplée avec l'inducteur. Le cas représenté dans la figure 1 correspond à une phase métallique ayant un point de fusion plus élevé que le laitier. De préférence aussi, le métal se rassemblant autour de l'axe est également entièrement solidifié, à la sortie de ladite seconde zone. Il peut ne pas toujours en être ainsi, surtout pour des métaux qui auraient un point de fusion plus faible que celui des scories, cas dans lequel le métal encore liquide se trouverait alors néanmoins entouré d'une phase solide de scories et contenu dans celle-ci. Comme représenté, le creuset s'étend de préférence au-delà de la seconde zone, dans le sens du déplacement des matériaux, formant ainsi une zone de refroidissement supplémentaire pour l'ensemble des matériaux, alors de préférence complètement solidifiés.

Un tel dispositif permet donc une élaboration de matériaux en continu, si l'on a soin d'assurer, par l'intermédiaire du dispositif d'alimentation (6), l'apport des différents constituants dans les proportions appropriées à la formation de ladite phase métallique fondue et desdites scories fondues dans la zone (14) puis, après leurs solidifications respectives dans la zone (16), l'extraction progressive et en continu de la pièce solide composite formée par ces deux phases de la partie inférieure (8) du four, à l'aide de moyens extérieurs ou de soutien non représentés.

Dans ce qui précède il a été supposé que les scories sont en proportion volumique relativement importante vis-à-vis de la totalité des matériaux traités; tel est en particulier le cas lorsque cette phase métallique et ces scories sont le résultat d'une réaction de pyrothermie ou d'aluminothermie, en vue de fabriquer par exemple un alliage de titane et d'aluminum par réaction d'oxyde de titane avec de l'aluminium, de préférence en présence d'un matériau susceptible de jouer un rôle de solvant commun du métal réducteur et de l'oxyde formé au cours de la réaction.

Il va de soi qu'il est à la portée du spécialiste de régler dans ces conditions la proportion pondérale des réactifs mis en œuvre, des débits d'alimentation du four de ces produits avec ces réactifs. Il dépend toujours du spécialiste de régler les puissances électriques débitées dans les deux inducteurs successifs ainsi que les fréquences visant à assurer les phénomènes qui ont été indiqués ci-dessus en tenant également compte des dimensions desdites zones (hauteurs et diamètre notamment). En ce qui concerne plus particulièrement les scories, on sait – ou l'on peut déterminer – la température et la fréquence-seuil minimum à une température donnée à partir desquelles un couplage de l'inducteur sur les scories devient possible, notamment en rapport avec des dimensions données du creuset. A température donnée les fréquences-seuils dans un type de scories sont en général d'autant plus élevées que le diamètre du creuset est faible. Il est spécialement indiqué ci-après, ne serait-ce que pour fournir une indication des paramètres qui sont à prendre en cause, qu'à une température de 1800 °C, il devient possible de former des courants induits dans une masse fondue de fluorure de calcium sous l'action d'une fréquence supérieure à 3 mghz lorsque le diamètre du creuset est de l'ordre de 75 mm, et supérieure à 800 Khz lorsque ce diamètre est de l'ordre de 200 mm.

Dans ce qui précède a été évoqué le cas préféré dans lequel les deux inducteurs (10) et (12) sont alimentés avec des courants d'induction de fréquences différentes, notamment de haute fréquence dans l'inducteur coagissant avec la première zone et de moyenne ou faible fréquence dans l'inducteur coagissant avec la seconde zone.

Bien entendu on peut également agir sur d'autres paramètres pour obtenir des effets semblables. Par exemple l'inducteur 12 peut être alimenté avec un courant de même fréquence que celui coagissant avec la première zone, cependant sous une puissance électrique plus réduite, insuffisante à assurer le maintien dans la seconde zone de la température régnant dans la première zone. Le refroidissement résultant a alors pour effet de supprimer la possibilité de couplage antérieurement existante entre l'inducteur 12 et les scories soumises à une réduction de température, par conséquent aussi à une interruption du brassage, facilitant leur solidification progressive à partir des parois du creuset pour former un gradient tel que celui mentionné plus haut.

Dans ce qui précède, le mouvement relatif des matériaux vis-à-vis des inducteurs était obtenu par déplacement des matériaux eux-mêmes, notamment de haut en bas dans les première et seconde zones fixes coagissant elles-mêmes avec les inducteurs fixes. Bien entendu, l'invention n'est pas limitée à ce cas.

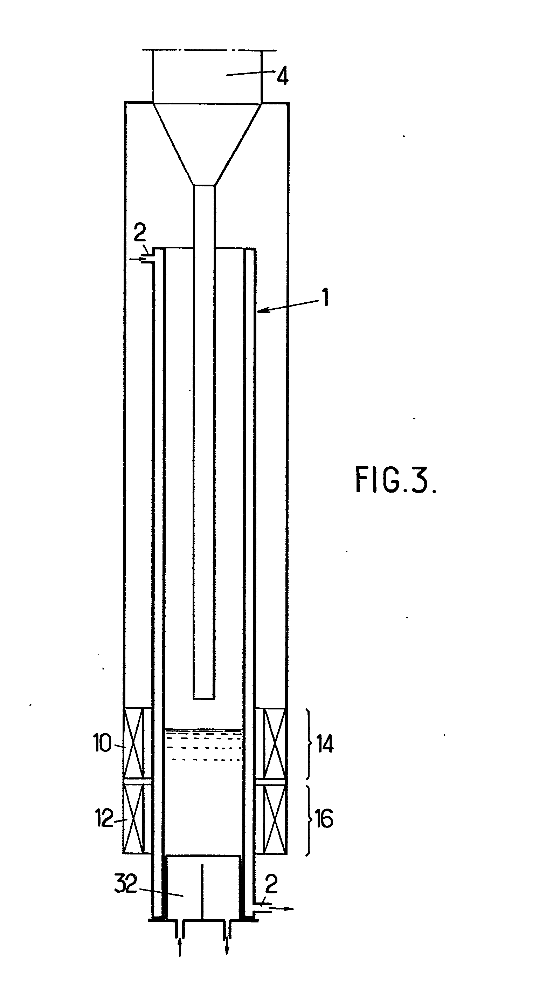

On a représenté dans la figure 3 une variante d'installation dans laquelle le mouvement relatif des matériaux vis-à-vis des inducteurs est obtenu cette fois-ci par déplacement des inducteurs eux-mêmes et avec eux des première et seconde zones telles qu'elles ont été définies ci-dessus, notamment de bas en haut. Les éléments que le dispositif représenté possède en commun avec celui de la figure 1 sont désignés par les mêmes numéros de référence. L'installation représentée diffère essentiellement en ce que son fond est cette fois-ci fermé par une sole amovible 32, également refroidie par une circulation d'eau, la partie supérieure du creuset communiquant comme dans le cas précédent avec une enceinte d'alimentation dans laquelle l'atmosphère peut être contrôlée. Les inducteurs 10 et 12, initialement à proximité de la sole 32, sont remontés d'une façon contrôlée du bas vers le haut du creuset froid, au fur et à mesure de l'alimentation du creuset avec les matériaux à traiter.

Dans ce cas également, on peut réaliser les différentes opérations évoquées en rapport avec l'installation de la figure 1. Lorsque l'opération de remontée des inducteurs est terminée et que la pièce formée occupe la quasi-totalité de la longueur du creuset représenté, la sole amovible 32 peut alors être retirée et la pièce extraite au moyen d'un dispositif extracteur classique.

Un autre résultat particulièrement intéressant que l'invention permet d'atteindre consiste, comme on l'a déjà indiqué plus haut, en la possibilité de «préfractionner» la phase métallique solidifiée en lingots successifs au niveau de la zone 16. A cette fin, si l'on se reporte à nouveau à la figure 1, il suffit de modifier par intermittence la nature des matériaux introduits dans la partie supérieure du creuset, par l'intermédiaire du dispositif d'alimentation 6.

En limitant ces matériaux à des composants susceptibles de ne donner lieu qu'à la formation de scories, lors de leur passage dans la première zone 14, il devient possible de former un «bouchon intermédiaire liquide» de scories. Celui-ci se transforme alors en un bouchon «solidifié» 26, à l'occasion de son passage dans la seconde zone. Le retour à une alimentation, dans la partie supérieure du creuset, en matériau conduisant à nouveau à la formation, d'une part, d'une phase métallique et, d'autre part, de scories, conduira à la formation, à la sortie de la seconde zone, d'un nouveau lingot 28a.

Comme visible à la figure 1, le bouchon solidifié 26 assure alors la séparation du lingot 28a en formation du lingot 28b antérieurement formé. A la sortie du four, les lingots 28a et 28b peuvent être aisément séparés par simple choc au niveau du «bouchon solidifié» 26 de scories.

Ce dernier résultat est également particulièrement intéressant à l'occasion de l'élaboration de métaux ou d'alliages dans des procédés n'impliquant normalement la formation que d'une faible proportion de laitiers, notamment dans une proportion volumique inférieure à 10%, voire inférieure à 5%, vis-à-vis de la totalité des matériaux normalement traités dans le four à induction.

On aura dans ce cas recours à un procédé en variante de l'invention, pouvant être défini comme suit. Le procédé concerne le traitement dans un four à induction de matériaux qui, après chauffage et fusion, résultent en la formation d'une phase métallique et d'une phase de scories. La proportion volumique des scories contenues dans les matériaux à traiter est faible, normalement inférieure à 10%, voire inférieure à 5% de la totalité des matériaux à traiter dans le four. Le four comprend, d'une part, un creuset susceptible d'être alimenté en matériaux dans la partie supérieure du four et, d'autre part, un premier inducteur et un second inducteur, respectivement établis autour d'une région de ce creuset, celui-ci étant transparent aux champs électromagnétiques pouvant être entretenus dans le four à l'aide de ces inducteurs.

Le procédé est caractérisé:

– en ce que l'on alimente en continu le four dans sa partie supérieure avec le susdit matériau à traiter, mais en modifiant cette alimentation de façon à n'introduire par intermittence dans cette région que des matériaux susceptibles de donner lieu par fusion à la production de scories,

– en ce que le premier inducteur (10) est alimenté avec un courant d'induction de puissance et de fréquence suffisamment élevées pour permettre le couplage direct de ce courant d'induction avec les matériaux dans la région susdite du creuset, de façon à maintenir les scories à l'état fondu,

démarrage de la réaction de façon en soi connue, on porte le fluorure de calcium à fusion, grâce à un courant de 850 KHz sous une puissance de 30 kW. Le $CaF_2$ est alors maintenu à l'état liquide. On introduit alors progressivement les déchets de titane dans le bain de $CaF_2$, ce qui permet à la fois de les isoler de l'atmosphère extérieure et de dissoudre déjà une partie des oxydes contenus dans ces déchets. On poursuit ensuite l'alimentation à la fois en déchets de titane et en $CaF_2$, à raison de 4% en poids vis-à-vis des déchets de titane et, au fur et à mesure de cette alimentation, on produit le déplacement des inducteurs dans des conditions qui ont été déjà indiquées.

En même temps l'on alimente l'inducteur 12 avec un courant ayant une fréquence de 10 KHz sous une puissance de 100 kW. Le champ magnétique obtenu permet de réaliser la fusion et le brassage du métal. Celui-ci se trouve alors séparé des parois du creuset par une pellicule fine de $CaF_2$. Lorsque les inducteurs se trouvent dans une position relative déterminée, éloignés du bas du creuset, notamment à proximité de sa partie supérieure, leur mouvement est interrompu, la sole (32) qui fermait le fond du creuset est enlevée. L'alimentation en déchets de titane et en $CaF_2$ dans la partie supérieure du creuset étant maintenue, on peut continuer l'élaboration en continu. L'extraction en continu du lingot métallique au fur et à mesure de sa formation, à partir de l'extrémité inférieure alors ouverte du creuset peut être réalisée de façon en soi connue, au moyen d'un extracteur non représenté. La pellicule de $CaF_2$ entourant la pièce métallique joue le rôle de lubrifiant et facilite cette extraction.

De temps en temps, l'alimentation en titane est interrompue pour laisser place à une alimentation en $CaF_2$. Le courant de haute fréquence fourni par l'inducteur (10) permet alors la fusion et le maintien à l'état fondu du $CaF_2$ dans la première zone. Cependant lorsque le $CaF_2$ fondu entre dans la seconde zone, l'interruption du couplage magnétique entraîne le refroidissement et par conséquent la solidification du $CaF_2$ (l'alimentation de l'inducteur (12) pouvant être le cas échéant interrompu). Lorsqu'une portion suffisante de $CaF_2$ a ainsi été solidifiée, formant le «bouchon solidifié» dont question plus haut, l'alimentation en titane est reprise. On obtient ainsi les discontinuités recherchées de $CaF_2$ entre plusieurs lingots métalliques, lesquels sont alors aisément séparés à la sortie du creuset.

**Revendications**

1. Procédé de séparation dans un four à induction d'une phase métallique et de scories contenues dans un creuset essentiellement transparent aux champs électromagnétiques entretenus à l'intérieur de ce four à induction, caractérisé en ce que l'on soumet les matériaux traités:
– dans une première zone à un courant d'induction de puissance et de fréquence suffisamment élevées pour permettre le couplage direct de ce courant d'induction avec les matériaux dans cette première zone, de façon à maintenir les scories à l'état fondu,
– puis, dans une seconde zone, de préférence adjacente à la précédente, à un courant d'induction de puissance ou de fréquence, ou les deux à la fois, telles que le couplage direct entre le courant d'induction et les scories ne soit plus permis; en ce que l'on produit un déplacement relatif des matériaux à l'intérieur du creuset vis-à-vis des susdites première zone et seconde zone, en aval de la précédente dans le sens dudit déplacement relatif, les positions relatives de ces zones étant déterminées en relation avec celles d'au moins un inducteur, de préférence deux inducteurs distincts, coagissant avec ce creuset, et en ce que dans la seconde zone, ladite fréquence d'induction est suffisamment réduite pour soumettre la phase métallique à des forces centripètes entraînant sa concentration sélective avant solidification dans la région interne, notamment axiale du four à induction, par soustraction partielle ou pratiquement totale de la phase métallique à l'action de la gravité.

2. Procédé selon la revendication 1, caractérisé en ce que la fréquence du courant d'induction dans la susdite première zone est suffisamment élevée pour être directement couplable avec les scories elles-mêmes, à la température à laquelle les scories sont alors soumises.

3. Procédé selon la revendication 1 ou 2, caractérisé en ce que la puissance et la fréquence du courant d'induction exerçant ses effets au niveau de la première zone sont réglées de façon à permettre le maintien à l'état fondu tant de la phase métallique que des scories.

4. Procédé selon la revendication 1 ou 2, caractérisé en ce que la puissance ou la fréquence ou les deux à la fois du courant d'induction exerçant ses effets au niveau de la seconde zone sont réglées de façon à permettre le retour progressif desdites scories à l'état solide, avant leur sortie de la seconde zone.

5. Procédé selon la revendication 4, caractérisé en ce que la fréquence du courant d'induction dans la seconde zone est réduite à une valeur n'autorisant plus le couplage électromagnétique avec les scories contenues dans cette seconde zone, à la température à laquelle elles sont ramenées dans ladite seconde zone.

6. Procédé selon la revendication 4, caractérisé en ce que la fréquence du courant d'induction dans la seconde zone est réduite à une valeur n'autorisant plus le couplage électromagnétique avec les scories contenues dans cette seconde zone, quelle que soit la température de ces scories.

7. Procédé selon l'une quelconque des revendications 3, 4, 5 et 6, caractérisé en ce que les scories sont en une proportion volumique d'au moins 10% vis-à-vis de la totalité des matériaux traités dans une même zone.

8. Procédé selon l'une quelconque des revendications 4 à 7, caractérisé en ce que ladite puissance ou fréquence ou les deux à la fois, sont ajustées dans la seconde zone de façon à ce que la phase métallique soit également complètement solidifiée à sa sortie de ladite seconde zone.

9. Procédé selon la revendication 8, caractérisé en ce que le creuset est essentiellement vertical, qu'il ne possède pas de fond, que le creuset et l'inducteur ou les inducteurs sont fixes, que le déplacement relatif du matériau vis-à-vis de l'inducteur est obtenu par déplacement de la charge des matériaux à l'intérieur du creuset, et que les phases séparées sont extraites toutes deux à l'état solidifié de la partie inférieure du four.

10. Procédé selon la revendication 9, caractérisé en ce qu'il est réalisé en continu avec l'alimentation en continu du four dans sa partie supérieure avec des matériaux résultant, après contact et chauffage, en la formation d'une phase métallique et d'une phase de scories toutes deux essentiellement à l'état fondu, dans la première zone.

11. Procédé selon l'une quelconque des revendications 1 à 8, caractérisé en ce que le creuset est un creuset allongé pourvu d'un fond et que le mouvement relatif du matériau dans les deux zones susdites et vis-à-vis du ou des inducteurs est obtenu, soit par déplacement de ceux-ci vis-à-vis du creuset, de sa partie inférieure vers sa partie supérieure, notamment au fur et à mesure de l'alimentation de ce creuset en matériaux à traiter, soit par déplacement de l'ensemble du creuset vis-à-vis des inducteurs.

12. Procédé selon la revendication 1 ou 2, caractérisé en ce que la proportion volumique des scories contenues dans les matériaux normalement traités dans le four à induction est inférieure à 10%, voire inférieure à 5% vis-à-vis de la totalité des matériaux traités dans le four.

13. Procédé selon la revendication 10, caractérisé en ce que, à l'occasion de la susdite alimentation en continu, on limite, par intermittence, les éléments introduits dans le four seulement à ceux qui sont ultérieurement aptes à former des scories, pour obtenir au sortir de la partie inférieure du four des pièces allongées solidifiées comprenant des parties consistant, à intervalles successifs, en scories uniquement, et en ce que l'on fractionne lesdites pièces allongées produites en continu, au niveau desdites parties, notamment par rupture à l'extérieur du four.

14. Procédé pour le traitement dans un four à induction de matériaux comportant une proportion volumique de scories inférieure à 10%, voire inférieure à 5% de la totalité des matériaux à traiter dans le four, ces matériaux étant tels qu'après chauffage et fusion, ils conduisent à la formation d'une phase métallique et d'une phase de scories, ce four comprenant, d'une part, un creuset susceptible d'être alimenté en continu dans la partie supérieure du four avec les matériaux à traiter et, d'autre part, un premier inducteur et un second inducteur respectivement établis autour d'une région de ce creuset, celui-ci étant transparent aux champs électromagnétiques entretenus dans le four, ledit procédé étant caractérisé:

– en ce que l'on alimente en continu le four dans sa partie supérieure avec le susdit matériau à traiter, mais en modifiant cette alimentation de façon à n'introduire par intermittence dans cette région que des matériaux susceptibles de donner lieu par fusion à la production de scories,

– en ce que le premier inducteur (10) est alimenté avec un courant d'induction de puissance et de fréquence suffisamment élevées pour permettre le couplage direct de ce courant d'induction avec les matériaux dans la région susdite du creuset, de façon à maintenir les scories à l'état fondu,

– en ce que le second inducteur (12) est alimenté avec un courant d'induction de puissance et de fréquence telles, ou les deux à la fois, que le couplage direct entre le courant d'induction et les scories ne soit plus permis,

– en ce que l'on produit un déplacement relatif des matériaux ci-dessus définis vis-à-vis des inducteurs,

– en ce que l'on alterne les alimentations électriques du premier inducteur (10) et du second inducteur (12), le premier inducteur étant mis en fonctionnement lorsque les matériaux alors introduits dans la susdite région du creuset sont limités à ceux qui ne sont destinés qu'à former des scories et le second inducteur étant essentiellement mis en fonctionnement lorsque les matériaux alors présents dans cette région résultent essentiellement, sous l'effet du chauffage, en une phase métallique, pour obtenir au sortir de la partie inférieure du four des pièces allongées solidifiées comprenant des parties consistant, à intervalles successifs, en scories uniquement,

– et en ce que l'on fractionne lesdites pièces allongées produites en continu, au niveau desdites parties, notamment par rupture à l'extérieur du four.

15. Procédé selon la revendication 14, caractérisé en ce que la susdite région est subdivisée en une première zone et en une seconde zone, distincte, de préférence adjacente à la précédente, le premier inducteur étant établi autour de la première zone et le second inducteur autour de la seconde zone.

16. Procédé selon la revendication 14, caractérisé en ce que le premier inducteur et le second inducteur sont superposés l'un à l'autre autour d'une région commune du creuset.

17. Procédé selon l'une quelconque des revendications 14 à 16, caractérisé en ce que la puissance fournie au second inducteur est suffisante à amener ou à maintenir à l'état fondu la totalité de la phase métallique qui y est traitée.

18. Procédé selon l'une quelconque des revendications 14 à 17, caractérisé en ce que le creuset est essentiellement vertical, qu'il ne possède pas de fond, que le creuset et les inducteurs sont fixes, que les déplacements relatifs vis-à-vis des inducteurs du matériau à traiter et, par intermittence, du matériau ne donnant lieu par fusion qu'à des scories, sont obtenus par déplacement de la charge des matériaux à l'intérieur du creuset, et que les phases séparées sont extraites toutes deux à l'état solidifié de la partie inférieure du four.

19. Procédé selon l'une quelconque des revendications 14 à 17, caractérisé en ce que le creuset est un creuset allongé pourvu d'un fond amovible (32) et que les inducteurs sont déplacés à partir de la partie inférieure du creuset, vers sa partie supérieure, au fur et à mesure de l'alimentation de ce creuset en matériaux à traiter et, par intermittence, en matériaux ne donnant par fusion que des scories.

**Claims**

1. A process for the separation in an induction furnace of a metallic phase and slag contained in a crucible substantially transparent to the electro-magnetic fields maintained inside said induction furnace, characterized in that the materials treated are subjected:
– in a first zone to an induction current of power and frequency high enough to enable such induction current to be directly coupled to the materials in such first zone, so as to retain the slag in the molten state;
– then, in a second zone, preferably adjacent the preceding zone, to an induction current of power or frequency, or both, such that such induction current and such slag can no longer be directly coupled;
and in that such materials are subjected to a relative displacement inside the crucible in relation to such first zone and second zone, downstream of the preceding zone in the direction of such relative displacement, the relative positions of such zones being determined in relation to those of at least one inductor, and preferably two separate inductors, co-operating with the crucible;
and in that in the second zone, said induction frequency is low enough to subject the metallic phase to centripetal forces producing its selective concentration before solidification in the internal region, more particularly axially of the induction furnace, by partially or substantially totally removing the metallic phase from the action of gravity.

2. A process according to Claim 1, characterized in that the frequency of the induction current in such first zone is high enough to be directly coupled to the slag at the temperature to which it is then subjected.

3. A process according to Claim 1 or 2, characterized in that the power and frequency of the induction current acting in the first zone are so controlled as to enable both the metallic phase and the slag to be retained in the molten state.

4. A process according to Claim 1 or 2, characterized in that the power or frequency, or both, of the induction current acting in the second zone are so controlled as to enable the slag to be progressively restored to the solid state before it leaves the second zone.

5. A process according to Claim 4, characterized in that the frequency of the induction current in the second zone is reduced to a value no longer allowing electro-magnetic coupling with the slag contained in such second zone at the temperature to which it is restored in such second zone.

6. A process according to Claim 4, characterized in that the frequency of the induction current in such second zone is reduced to a value no longer allowing electro-magnetic coupling to the slag contained in such second zone, whatever its temperature may be.

7. A process according to any of Claims 3, 4, 5 and 6, characterized in that the slag is in a proportion of at least 10% by volume in relation to the whole of the materials treated in the same zone.

8. A process according to any of Claims 4 to 7, characterized in that said power or frequency, or both, are so adjusted in the second zone that the metallic phase is also completely solidified at its discharge from said second zone.

9. A process according to Claim 8, characterized in that the crucible is substantially vertical; it has no bottom; the crucible and the or each inductor are fixed; relative displacement of the material in relation to the inductor is obtained by the displacement of the charge of materials inside the crucible; and the separate phases are both extracted in the solidified condition from the lower part of the furnace.

10. A process according to Claim 9, characterized in that it is performed continuously with the continuous feed of the materials to the upper part of the furnace resulting, after contact and heating, in the formation of a metallic phase and a slag phase both substantially in the molten condition in the first zone.

11. A process according to any of Claims 1 to 8, characterized in that the crucible is an elongate crucible having a bottom, and the relative movement of the material in such two zones and with relation to the or each inductor is obtained either by the displacement of the latter upwardly in relation to the crucible, more particularly as the crucible is fed with the materials to be treated, or by the displacement of the crucible assembly in relation to the inductors.

12. A process according to Claim 1 or 2, characterized in that the proportion by volume of the slag contained in the material normally treated in the induction furnace is lower than 10%, or even lower than 5% in relation to the whole of the materials treated in the furnace.

13. A process according to Claim 10, characterized in that when the feed is continuous, the elements introduced into the furnace are limited, by intermittence, solely to those which are subsequently adapted to form slag, in order to obtain on discharge from the lower part of the furnace elongate solidified pieces comprising portions consisting at successive intervals solely of slag, and such continuously produced, elongate pieces are fractioned at such portions, more particularly by breaking them outside the furnace.

14. A process for the treatment in an induction furnace of materials comprising a proportion by volume of slag lower than 10%, or even lower than 5% of the whole of the materials to be treated in the furnace, the materials being such that, after heating and melting, they lead to the formation of a metallic phase and a slag phase, such furnace comprising on the one hand, a crucible adapted to be continuously fed in the upper part of the furnace with the materials to be treated and, on the other hand a first inductor and a second inductor respectively disposed around a region of the crucible, which is transparent to the electro-magnetic fields maintained in the furnace, such process being characterized:

– in that the upper part of the furnace is continuously fed with such material for treatment, but while so modifying such feed as to introduce intermittently into such region only materials adapted to produce the slag by melting;

– in that the first inductor (10) is supplied with an induction current of power and frequency high enough to enable such induction current to be directly coupled to the materials in such region of the crucible, so as to retain the slag in the molten condition;

– in that the second inductor (12) is supplied with an induction current of power and frequency, or both, such that the induction current can no longer be directly coupled to the slag;

– in that the aforedefined materials are displaced relatively in relation to the inductors;

– in that the electric supplies to the first inductor (10) and the second inductor (12) are alternated, the first inductor being operated when the materials then introduced into such region of the crucible are limited to those adapted only to form slag, the second inductor being mainly operated only when the materials then present in said region result mainly, as a result of heating, in a metallic phase, to obtain on discharge from the lower part of the furnace elongate solidified pieces comprising portions consisting at successive intervals solely of slag;

– and in that such continuously produced elongate pieces are fractioned at such portions, more particularly by breaking them outside the furnace.

15. A process according to Claim 14, characterized in that said region is subdivided into a first zone and a second, separate zone, preferably adjoining the preceding zone, the first inductor being disposed around such first zone and the second inductor around such second zone.

16. A process according to Claim 14, characterized in that the first inductor and the second inductor are superimposed on one another around a common region of the crucible.

17. A process according to any of Claims 14 to 16, characterized in that the power supplied to the second inductor is adequate to melt or retain in the molten condition the whole of the metallic phase treated at that place.

18. A process according to any of Claims 14 to 17, characterized in that the crucible is substantially vertical, it has no bottom, the crucible and the inductors are fixed; the relative displacements in relation to the inductors of the material for treatment are, intermittently, of the material producing by melting only slag, are obtained by the displacement of the charge of materials inside the crucible; and the separate phases are both extracted in the solidified condition from the lower part of the furnace.

19. A process according to any of Claims 14 to 17, characterized in that the crucible is an elongate crucible having a detachable bottom (32), and the inductors are displaced upwardly in the crucible as such crucible is fed with the materials to be treated and, intermittently, with materials giving by melting solely slag.

**Patentansprüche**

1. Verfahren zum Trennen einer Metallphase von der Schlacke in einem Induktionsofen, wobei die Metallphase und die Schlacke in einem Schmelztiegel enthalten sind, der für die im Innern des Induktionsofens aufrechterhaltenen elektromagnetischen Felder im wesentlichen durchlässig ist, dadurch gekennzeichnet, dass man die behandelten Materialien unterwirft:

– in einer ersten Zone einem Induktionsstrom, dessen Leistung und Frequenz genügend hoch sind, um die direkte Kopplung des Induktionsstromes mit den Materialien in dieser ersten Zone zu ermöglichen, so dass auf diese Weise die Schlacken in geschmolzenem Zustand gehalten werden,

– dann in einer zweiten, vorzugsweise an die erste Zone angrenzenden Zone einem Induktionsstrom, dessen Leistung oder Frequenz oder beide gleichzeitig derart sind, dass die direkte Kopplung zwischen dem Induktionsstrom und den Schlacken nicht mehr ermöglicht wird;

dass man eine Relativverschiebung der Materialien im Inneren des Tiegels gegenüber der vorgenannten ersten Zone und zweiten Zone erzeugt, die in Richtung der Relativverschiebung stromabwärts von der ersten Zone angeordnet ist, wobei die relativen Positionen dieser Zonen relativ zu den Positionen mindestens eines Induktors, vorzugsweise zweier verschiedener Induktoren bestimmt sind, die mit dem Tiegel zusammenwirken, und dass in der zweiten Zone die Induktionsfrequenz genügend verringert ist, um die Metallphase Zentripetalkräften zu unterwerfen, die durch den teilweisen oder praktisch vollständigen Entzug der Metallphase von der Wirkung der Schwerkraft deren selektive Konzentration vor der Verfestigung im inneren Bereich, vorzugsweise im Axialbereich des Induktionsofens bewirken.

2. Verfahren nach Anspruch 1, dadurch gekennzeichnet, dass die Frequenz des Induktionsstroms in der ersten Zone ausreichend hoch ist, um bei der Temperatur, der die Schlacken dann unterworfen sind, direkt mit den Schlacken selbst koppelbar zu sein.

3. Verfahren nach Anspruch 1 oder 2, dadurch gekennzeichnet, dass die Leistung und die Frequenz des Induktionsstroms, der seine Wirkungen in Höhe der ersten Zone ausübt, derart geregelt werden, dass sowohl die Metallphase als auch die Schlacken in geschmolzenem Zustand gehalten werden können.

4. Verfahren nach Anspruch 1 oder 2, dadurch gekennzeichnet, dass die Leistung und/oder die Frequenz des Induktionsstromes, der seine Wirkungen in Höhe der zweiten Zone ausübt, derart geregelt werden, dass die Schlacken vor dem Verlassen der zweiten Zone allmählich in den festen Zustand zurückkehren können.

5. Verfahren nach Anspruch 4, dadurch gekennzeichnet, dass die Frequenz des Induktionsstromes in der zweiten Zone auf einen Wert verringert wird, der bei der Temperatur, bei der die Schlakken in die zweite Zone zurückgeführt werden, nicht mehr die elektromagnetische Kopplung mit den in der zweiten Zone enthaltenen Schlacken erlaubt.

6. Verfahren nach Anspruch 4, dadurch gekennzeichnet, dass die Frequenz des Induktionsstromes in der zweiten Zone auf einen Wert verringert wird, der unabhängig von der Temperatur der Schlacken nicht mehr die elektromagnetische Kopplung mit den in der zweiten Zone enthaltenen Schlacken erlaubt.

7. Verfahren nach einem der Ansprüche 3, 4, 5 oder 6, dadurch gekennzeichnet, dass die Schlakken gegenüber der Gesamtheit der in derselben Zone behandelten Materialien in einem Volumenanteil von mindestens 10% vorliegen.

8. Verfahren nach einem der Ansprüche 4 bis 7, dadurch gekennzeichnet, dass die Leistung und/ oder die Frequenz in der zweiten Zone derart eingestellt werden, dass die Metallphase beim Austritt aus der zweiten Zone auch vollständig verfestigt ist.

9. Verfahren nach Anspruch 8, dadurch gekennzeichnet, dass der Tiegel im wesentlichen senkrecht ist, dass er keinen Boden aufweist, dass der Tiegel und der Induktor oder die Induktoren feststehend sind, dass die Relativverschiebung des Materials gegenüber dem Induktor durch Verschiebung der Masse der Materialien im Innern des Tiegels erhalten wird, und dass die getrennten Phasen beide in festem Zustand aus dem unteren Teil des Ofens abgezogen werden.

10. Verfahren nach Anspruch 9, dadurch gekennzeichnet, dass es kontinuierlich durchgeführt wird mit kontinuierlicher Speisung des Ofens in seinem oberen Teil mit den Materialien, wodurch nach Kontakt und Erwärmung in der ersten Zone eine Metallphase und eine Schlackenphase gebildet werden, die beide im wesentlichen in geschmolzenem Zustand sind.

11. Verfahren nach einem der Ansprüche 1 bis 8, dadurch gekennzeichnet, dass der Tiegel ein länglicher, mit einem Boden versehener Tiegel ist und dass die Relativbewegung des Materials in den beiden genannten Zonen und gegenüber dem Induktor oder den Induktoren entweder durch Verschiebung dieser gegenüber dem Tiegel von unten nach oben, insbesondere allmählich im Verlauf der Speisung des Tiegels mit zu behandelnden Materialien, oder durch Verschiebung des gesamten Tiegels gegenüber den Induktoren erzielt wird.

12. Verfahren nach Anspruch 1 oder 2, dadurch gekennzeichnet, dass der Volumenanteil der Schlacken, die in den normalerweise im Induktionsofen behandelten Materialien enthalten sind, weniger als 10%, insbesondere weniger als 5% gegenüber der Gesamtheit der im Ofen behandelten Materialien beträgt.

13. Verfahren nach Anspruch 10, dadurch gekennzeichnet, dass man bei der kontinuierlichen Speisung abwechslungsweise die dem Ofen zugeführten Elemente nur auf diejenigen beschränkt, die später Schlacken bilden können, um am Austritt aus dem unteren Teil des Ofens längliche, erstarrte Stücke zu halten, die Abschnitte aufweisen, die in aufeinanderfolgenden Intervallen nur aus Schlacken bestehen, und dass man diese länglichen, kontinuierlich erzeugten Stücke in Höhe dieser Abschnitte teilt, insbesondere durch Brechen ausserhalb des Ofens.

14. Verfahren zum Behandeln von Materialien in einem Induktionsofen, die einem Volumenanteil an Schlacken von weniger als 10%, insbesondere weniger als 5% der Gesamtheit der im Ofen zu behandelnden Materialien aufweisen, wobei diese Materialien nach dem Erwärmen und Schmelzen zur Bildung einer Metallphase und einer Schlackenphase führen, wobei der Ofen einerseits einen Tiegel aufweist, der im oberen Teil des Ofens kontinuierlich mit den zu behandelnden Materialien gespeist werden kann, und andererseits einen ersten Induktor und einen zweiten Induktor, die jeweils um einen Bereich des Tiegels angeordnet sind, und wobei der Tiegel für die im Ofen aufrechterhaltenen elektromagnetischen Felder durchlässig ist, dadurch gekennzeichnet,

– dass man den Ofen in seinem oberen Teil kontinuierlich mit den genannten zu behandelnden Materialien speist, wobei diese Speisung aber derart verändert wird, dass in diesem Bereich intermittierend nur Materialien zugeführt werden, die nach dem Schmelzen die Herstellung von Schlacken bewirken,

– dass der erste Induktor (10) mit einem Induktionsstrom gespeist wird, dessen Leistung und Frequenz ausreichend hoch sind, um die direkte Kopplung des Induktionsstroms mit den Materialien im genannten Bereich des Tiegels zu ermöglichen, so dass die Schlacken in geschmolzenem Zustand gehalten werden,

– dass der zweite Induktor (12) mit einem Induktionsstrom gespeist wird, dessen Leistung und/ oder Frequenz die direkte Kopplung zwischen dem Induktionsstrom und den Schlacken nicht mehr erlauben,

– dass man eine Relativverschiebung der oben genannten Materialien gegenüber den Induktoren erzeugt,

– dass man die elektrische Speisung des ersten Induktors (10) und des zweiten Induktors (12) umschaltet, wobei der erste Induktor betätigt wird, wenn die dann in den genannten Bereich des Tiegels eingeführten Materialien auf diejenigen beschränkt sind, die nur zur Schlackenbildung bestimmt sind, und wobei der zweite Induktor im wesentlichen betätigt wird, wenn die dann in diesem Bereich vorliegenden Materialien bei der Erwärmung im wesentlichen zu einer metallischen Phase führen, um am Austritt des unteren Teiles des Ofens längliche, erstarrte Stücke zu erhalten, die Abschnitte aufweisen, die in aufeinanderfolgenden Intervallen lediglich aus Schlacken bestehen,

– und dass man die genannten länglichen, kontinuierlich hergestellten Stücke in Höhe der genannten Abschnitte teilt, insbesondere durch Brechen ausserhalb des Ofens.

15. Verfahren nach Anspruch 14, dadurch gekennzeichnet, dass der genannte Bereich unterteilt ist in eine erste Zone und in eine zweite Zone, die von der ersten Zone verschieden und vorzugsweise der ersten Zone benachbart ist, wobei der erste Induktor um die erste Zone und der zweite Induktor um die zweite Zone angeordnet ist.

16. Verfahren nach Anspruch 14, dadurch gekennzeichnet, dass der erste Induktor und der zweite Induktor übereinander um einen gemeinsamen Bereich des Tiegels angeordnet sind.

17. Verfahren nach einem der Ansprüche 14 bis 16, dadurch gekennzeichnet, dass die dem zweiten Induktor zugeführte Leistung ausreichend ist, um die gesamte dort behandelte metallische Phase in den geschmolzenen Zustand zu bringen oder in diesem zu erhalten.

18. Verfahren nach einem der Ansprüche 14 bis 17, dadurch gekennzeichnet, dass der Tiegel im wesentlichen senkrecht ist, dass er keinen Boden aufweist, dass der Tiegel und die Induktoren feststehend sind, dass die Relativverschiebungen des zu behandelnden Materials und, mit Unterbrechungen, des durch Schmelzen nur zur Schlakkenbildung beitragenden Materials relativ zu den Induktoren durch Verschiebung der Masse der Materialien im Innern des Tiegels erhalten werden, und dass die getrennten Phasen beide in erstarrtem Zustand vom unteren Teil des Ofens abgezogen werden.

19. Verfahren nach einem der Ansprüche 14 bis 17, dadurch gekennzeichnet, dass der Tiegel ein länglicher, mit einem abnehmbaren Boden (32) versehener Tiegel ist, und dass die Induktoren vom unteren Teil des Tiegels in Richtung auf seinen oberen Teil verschoben werden im Verlauf der Speisung des Tiegels mit zu behandelnden Materialien und mit Unterbrechung mit Materialien, die durch Schmelzen nur Schlacken ergeben.

0 074 871

# FIG.1.

# FIG.2.

15

FIG.3.